# EUROPEAN PATENT APPLICATION

(11) **EP 1 059 206 A2**
(43) Date of publication of application: **13.12.2000**
(21) Application number: 00111800.9
(22) Date of filing: 05.06.2000
(51) Int. Cl.: B60R 13/08, B60R 13/02

(54) **A cladding for the front lower part of the passenger compartment of a motor vehicle**

(30) Priority: 08.06.1999 IT TO990107 U
(71) Applicant: FIAT AUTO S.p.A., 10135 Torino (IT)
(72) Inventor: Giolito, Roberto, 10128 Torino (IT)
(74) Representative: Fioravanti, Corrado

(57) **Abstract**

A cladding for the front and lower parts of the passenger compartment of a motor vehicle forms a first lower portion (11a, 12a) for cladding an underfoot area of the floor of the vehicle and a second portion (11b, 12b) in one piece with the first portion, for cladding the fire wall. The second portion extends upwards to form a third upper portion (11c, 12c), in one piece with the second portion, which is shaped and pre-formed for cladding the dashboard up to windscreen level. The cladding is made of a flexible plastics material.

## Description

The present invention relates to a cladding for the front lower part of the passenger compartment of a motor vehicle.

The object of the invention is to reduce the number of elements constituting the cladding of the aforesaid portions of the passenger compartment, in order to reduce assembly times and costs, and to eliminate conventional carpets which are generally laid on the underfoot area of a vehicle floor.

This object is achieved, according to the present invention, by providing a cladding for the front lower areas of the passenger compartment of a motor vehicle which includes at least one element of flexible plastics material, shaped so as to form, in one piece:
- a lower portion for covering an underfoot area of the vehicle floor;
- an intermediate portion for cladding the fire wall, and
- a preformed upper portion for cladding the dashboard region up to the windscreen level.

Further characteristics and advantages of the invention will become apparent from the following detailed description of one embodiment, with reference to the appended drawings, provided purely by way of non-limitative example, in which:
Figure 1 is a perspective view of a first embodiment of the cladding of the invention, associated with a separate pocket for small objects;
Figure 2 is a schematic, vertical longitudinal section of the cladding of Figure 1 applied to the passenger compartment of a motor vehicle on the front passenger side;
Figure 3 is a schematic, vertical longitudinal section of the cladding of Figure 1 applied to the passenger compartment of a motor vehicle on the driver's side;
Figure 4 is a perspective view of a second embodiment of the cladding of the invention, which forms an integral pocket for small objects; and
Figure 5 is a schematic transverse section, on an enlarged scale, of a detail of Figure 4.

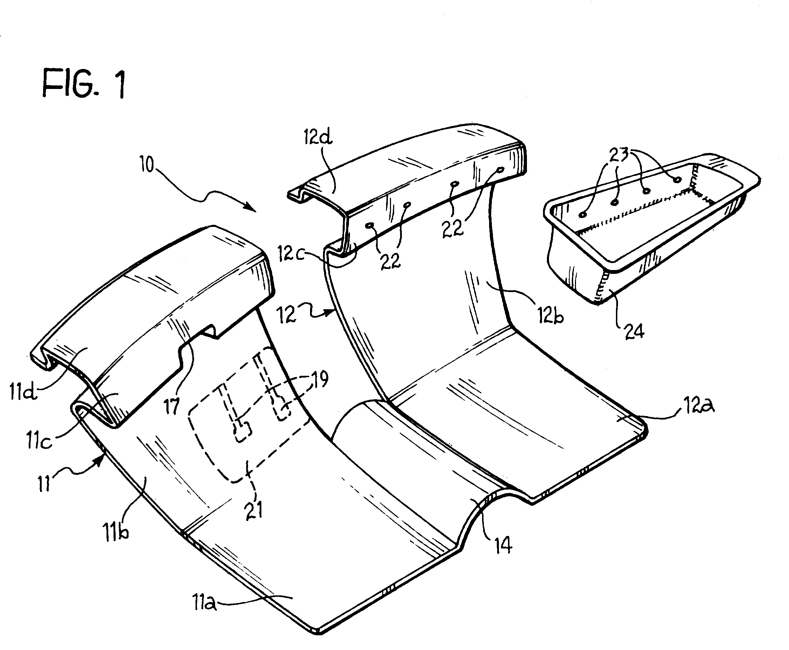

With reference first to Figure 1, a cladding according to the invention, for the front and lower part of the passenger compartment of a motor vehicle, is generally indicated 10. The cladding 10 includes a pair of laterally adjacent cladding elements 11, 12, one in the driver's area and one in the front passenger's area.

Each cladding element 11, 12 forms, in one piece, a substantially flat and horizontal lower portion 11a, 12a which dads the front underfoot area of the vehicle floor, an intermediate portion 11b, 12b, inclined forwards and upwards, which dads the fire wall and an upper portion 11c, 12c which is shaped so as to clad the dashboard area up to the windscreen level.

In the embodiment shown in Figure 1, the two laterally adjacent elements 11 and 12 are each formed in one piece and joined by a central connecting portion 14 which joins the lower portions 11a, 12a. In the example of Figure 1, the connecting portion 14 is curved so as to follow the floor of the vehicle in this region.

The cladding 10 is formed of a flexible, composite material with an upper surface layer of polyethylene, facing into the passenger compartment and moulded onto a lower layer of expanded polypropylene for bonding to the vehicle body. This choice of materials is an advantage as it reduces vibrations from the vehicle floor; in addition, the above materials have good sound-proofing properties.

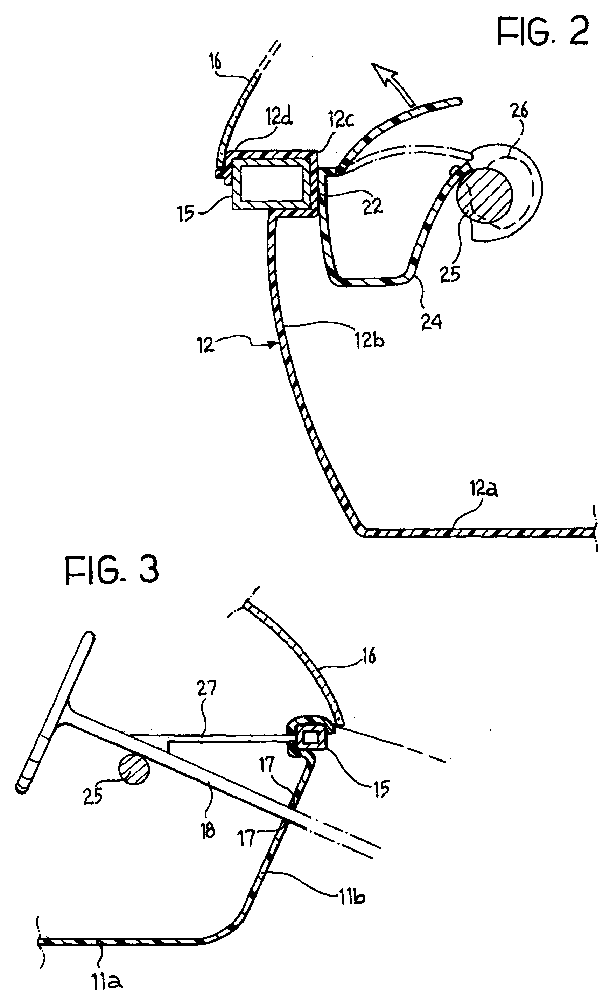

The composite material constituting the cladding 10 is cut and heat formed to match any projections and recesses, especially in the dashboard area. As also shown in Figure 2, the upper front edges 11d and 12d of the laterally adjacent elements 11 and 12 are curved and heat bonded to the upper portion of a front cross member 15 which runs along the lower edge of the windscreen 16.

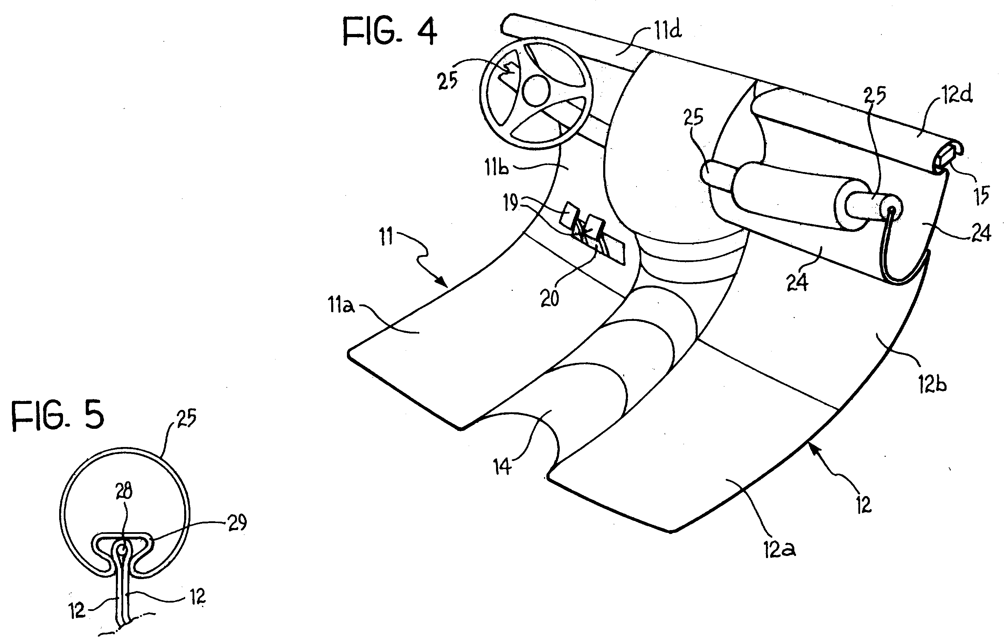

On the driver's side, the cladding element 11 has an opening 17 in the dashboard portion 11c for letting the steering column 18 through (shown in Figure 3). As illustrated in Figure 4, in the lower part of the intermediate portion 11b, where the pedals 19 are located, the cladding element 11 has an additional opening 20 for the pedals to pass through or, alternatively, as shown in Figure 4, a continuous thinner and more resilient area 21 which covers the pedals 19 from above thereby eliminating the possibility of the projecting pedals injuring the driver's legs in the case of a head-on collision.

With reference again to Figures 1 and 2, fixing means or seatings 22, such as Velcro strips or pressure fastener elements or apertures, can be provided on the dashboard portion 12c of the cladding element 12 for engagement by corresponding fixing means 23 secured to a pocket 24 for small objects, this to be supported at the back by the cross member 15 and at the front by a preferably curved transverse bar 25 projecting into the compartment and fixed at each end to the vehicle body near the ends of the cross member 15.

In addition, an airbag 26 for the front passenger is mounted on the bar 25, horizontally and at the height of the cross member 15, while on the driver's side the bar 25 constitutes an advantageous support for the steering column 18; the steering column 18 is also preferably securely fixed to the cross member 15 by means of a stiffening rod 27.

Figure 4 illustrates a variant in which the pocket 24 is formed by the same cladding 12, suspended from the bar 25 by means of a fixing element 28 inserted into a longitudinal recess 29 formed by the bar 25, as shown on an enlarged scale in Figure 5.

Naturally, the principle of the invention remaining the same, embodiments and manufacturing details may vary widely from those described and illustrated purely by way of non-limitative example, without departing thereby from the scope of the invention. In particular, the cladding elements 11, 12 could extend to the rear so as also to clad the floor area in front of the rear seats of the vehicle.

## Claims

1. Cladding for the front and lower areas of the passenger compartment of a motor vehicle, formed of a first lower portion (11a, 12a) for cladding an underfoot area of the vehicle, a second portion (11b, 12b), in one piece with the first, for cladding the fire wall; characterised in that the said second portion extends upwards to form a third, upper portion (11c, 12c), in one piece with the second portion, shaped and pre-formed to clad the dashboard area up to the windscreen level, the said cladding being made of a flexible plastics material.

2. Cladding according to Claim 1, characterised in that it forms, in one piece, a pair of laterally adjacent cladding elements, one (11) on the driver's side and the other (12) on the front passenger side.

3. Cladding according to Claim 1, characterised in that the said third portion (11c, 12c) has a front, upper edge (11d, 12d) heat folded so as to wrap around the upper portion of a front cross member (15) which extends beneath the lower edge of the windscreen (16).

4. Cladding according to Claim 3, characterised in that the said third portion is shaped so as also to form a pocket (24) for small objects, arranged between the said front cross member (15) and a transverse bar (25) projecting into the passenger compartment.

5. Cladding according to Claim 3, characterised in that the said upper third portion (11c, 12c) has fixing seatings or means (22) for fastening an object holder pocket (24) arranged between the said front cross member (15) and a transverse bar (25) which projects into the passenger compartment.

6. Cladding according to Claim 1, characterised in that the said plastics material is a composite material with an upper layer of polyethylene, for facing into the driving compartment, and a layer of expanded polypropylene for adhering to the body of the vehicle.

7. Cladding according to Claim 1, characterised in that it is cut and heat formed so that it matches the projections and recesses of the surfaces to clad.

8. Cladding according to Claim 1, characterised in that it has an opening (17) for the steering column (18) to pass through.

9. Cladding according to Claim 1, characterised in that it has an opening (20) for the control pedals (19) of the vehicle to pass through.

10. Cladding according to Claim 1, characterised in that it has a resilient area (21) in the region of the control pedals (19) of the vehicle for covering over the said pedals.

11. Cladding according to Claim 2, characterised in that the said laterally adjacent elements (11, 12) are joined by a central connecting portion (14).

12. Cladding according to Claim 11, characterised in that the said connecting portion (14) joins the first, lower portions (11a, 12a) of the two cladding elements (11, 12).
